# EUROPÄISCHE PATENTSCHRIFT

(11) **EP 3 599 195 B1**
(45) Veröffentlichungstag und Bekanntmachung des Hinweises auf die Patenterteilung: **22.03.2023**
(21) Anmeldenummer: 18185187.4
(22) Anmeldetag: 24.07.2018
(51) Int. Cl.: B65G 47/76

(54) **AUSSORTIERVORRICHTUNG**
SORTING DEVICE
DISPOSITIF DE TRIAGE

(43) Veröffentlichungstag der Anmeldung: 29.01.2020
(73) Patentinhaber: Bizerba SE & Co. KG, 72336 Balingen (DE)
(72) Erfinder: GÖSTENKORS, Marco, 31191 Algermissen (DE)
(74) Vertreter: Manitz Finsterwald Patent- und Rechtsanwaltspartnerschaft mbB

(56) Entgegenhaltungen:
- WO-A2-2012/083033
- JP-U- S4 943 980
- US-A- 1 729 671
- US-A- 4 643 291

## Beschreibung

Die vorliegende Erfindung betrifft eine Vorrichtung zum Aussortieren von auf einem Förderband in eine Förderrichtung transportierten Artikeln, umfassend ein Förderband, das eine Förderstrecke bzw. eine Förderbahn definiert, einen Weichenarm, der an einem Ende um eine Drehachse eines jeweiligen in Förderrichtung auf einer Seite des Förderbands angeordneten, eine Welle aufweisenden Schwenklagers schwenkbar gelagert und zwischen einer Grundstellung, in der sich der jeweilige Weichenarm außerhalb der Förderstrecke, außerhalb des Förderbands, und in Förderrichtung erstreckt, und einer Aussortierstellung, in der der jeweilige Weichenarm in die Förderstrecke eingeschwenkt ist, verschwenkbar ist, eine jeweilige mit der Welle des jeweiligen Schwenklagers antriebswirksam gekoppelte, einen Schwenkantrieb umfassende Verstelleinrichtung, und eine Steuereinheit zur Aktivierung der jeweiligen Verstelleinrichtung und damit der Einschwenkbewegung des jeweiligen Weichenarms in Reaktion auf ein jeweiliges von einem jeweiligen Kontrollsystem für die Artikel, insbesondere einem Wägeband, empfangenes Aussortiersignal. Eine Vorrichtung nach dem Oberbegriff des Anspruchs 1 ist aus dem Dokument US 4,643,291 bekannt.

Eine derartige Aussortiervorrichtung kann insbesondere bei einer Kontrollwaage zum Einsatz kommen. Kontrollwaagen mit Transportband werden innerhalb von Produktionsprozessen zur Gewichtskontrolle eingesetzt. Eine Kontrollwaage wird auch als Checkweigher bezeichnet. Bei einer Kontrollwaage werden Artikel, insbesondere verpackte Produkte, mittels einem oder mehreren Transport- bzw. Förderbänder, einschließlich eines Wägebands, über eine Wägeplattform geführt, um die Artikel auf die Einhaltung vorgegebener Gewichtskriterien hin zu überwachen. Um einen möglichst hohen Durchsatz zu erreichen, werden hierbei vor allem dynamische Kontrollwaagen eingesetzt, die die Artikel im Durchlauf messen, d.h. die Messungen werden vorgenommen, während sich der jeweilige Artikel aufgrund einer kontinuierlichen Bewegung des Transportbands ohne Stopp über die Wägeplattform hinweg bewegt.

Falls ein Artikel die vorgegebenen Gewichtskriterien nicht erfüllt, insbesondere falls das Gewicht eines Artikels außerhalb eines vorgegebenen Gewichtsbereichs liegt, muss der jeweilige fehlgewichtige Artikel aussortiert werden. Das Aussortieren erfolgt mittels einer Aussortiervorrichtung, beispielsweise einem in die Förderstrecke des Förderbands einschwenkbaren Weichenarm, der den in Förderrichtung transportierten Artikel von dem Förderband in einen neben dem Transportband angeordneten Auffangbehälter umlenkt.

Eine Aussortierung ist aber auch dann erforderlich, wenn ein Artikel mit einem Fremdkörper wie z.B. Metall, Glas oder dergleichen verunreinigt ist. Fremdkörper können beispielsweise mittels eines Metalldetektors oder eines Röntgen-Inspektionssystems detektiert werden. Die Aussortierung kann auch auf Basis eines Signals eines optischen Kontrollsystems veranlasst sein, insbesondere wenn eine fehlerhafte Etikettierung (z.B. falsch oder unvollständig bedruckte Etiketten oder falsch aufgeklebte oder fehlende Etiketten) oder eine fehlerhafte Verpackung (z.B. Fehler in einer Schweißnaht zwischen einer Tray-Schale und einer Folie) detektiert wird. Ein Metalldetektor, ein Röntgen-Inspektionssystem oder ein optisches Kontrollsystem jeweils mit Sortiereinrichtung kann mit oder aber auch ohne Waage bzw. ohne Waagen-Funktionalität zum Einsatz kommen.

Darüber hinaus kann die eingangs beschriebene Aussortiervorrichtung auch bei einem Preisauszeichner zum Einsatz kommen, mit dem ungleichgewichtige Waren, insbesondere dynamisch, gewogen werden können, wobei der Preis der jeweiligen Ware jeweils in Abhängigkeit von dem jeweils bestimmten Gewicht ermittelt wird. Die Aussortierung kann dann z.B. auf Basis eines Metalldetektors, eines Röntgen-Inspektionssystems und/oder eines optischen Kontrollsystems erfolgen.

Eine wie eingangs beschriebene Aussortiervorrichtung ist beispielsweise aus dem Dokument US 9,522,414 B2 oder dem Dokument EP 2 890 243 B1 bekannt, bei denen in Förderrichtung zu beiden Seiten des Förderbands bzw. der Förderstrecke des Förderbands ein Weichenarm angeordnet ist. Der jeweilige Weichenarm ist um eine Drehachse eines jeweiligen Schwenklagers, das an seinem in Förderrichtung liegenden Ende vorgesehen ist, verschwenkbar und kann daher ausgehend von einer Grundstellung neben dem Förderband in die Förderstrecke, und zwar zwischen zwei hintereinander auf dem Förderband transportierte Artikel eingedreht bzw. eingeschwenkt werden, um einzelne Artikel aus einem kontinuierlichen Fluss von Artikeln auf die Seite, auf der der jeweilige Weichenarm gelagert ist, herauszuleiten und so auszusortieren.

Allerdings kann der jeweilige Weichenarm erst dann in die Förderstrecke einschwenken, wenn ein nicht auszusortierender, vorauslaufender Artikel den Weichenarm bereits vollständig passiert hat und ein auszusortierender, nachlaufender Artikel sich noch nicht im Bereich des entgegen der Förderrichtung liegenden Endes des Weichenarms befindet. Die Lücke zwischen zwei Artikeln muss daher entsprechen groß gewählt werden. Andernfalls könnte von dem auf die Förderstrecke einschwenkenden Weichenarm der vorauslaufende Artikel getroffen oder der nachlaufende Artikel in Richtung der anderen Seite des Förderbands, und dies unkontrolliert, geschoben werden. Je größer der Abstand zwischen den kontinuierlich geförderten Artikeln ist, desto geringer ist jedoch deren Durchsatz, d.h. die Leistung der Fördervorrichtung (Artikel pro Minute) wird beeinträchtigt.

Der Erfindung liegt die Aufgabe zugrunde, eine Aussortiervorrichtung der eingangs genannten Art anzugeben, welche bei einer Kontrollwaage oder dergleichen einen höheren Durchsatz ermöglicht.

Diese Aufgabe wird durch eine Aussortiervorrichtung mit den Merkmalen des unabhängigen Anspruchs 1 gelöst, und insbesondere dadurch, dass das jeweilige Schwenklager, insbesondere in der Grundstellung, an dem entgegen der Förderrichtung liegenden Ende des jeweiligen Weichenarms vorgesehen ist, um einen auszusortierenden Artikel auf der dem jeweiligen Schwenklager gegenüberliegenden Seite von dem Förderband zu lenken.

Erfindungsgemäß ist das Schwenklager des jeweiligen Weichenarms also nicht an dem in Förderrichtung liegenden Ende des Weichenarms vorgesehen, sondern an dem anderen Ende, d.h. an dem entgegen der Förderrichtung liegenden Ende, wodurch ein auszusortierender Artikel nicht auf die Seite des Förderbands, auf der der jeweilige Weichenarm drehgelagert ist, geleitet wird, sondern auf die andere Seite des Förderbands. Dies ermöglicht, dass der Abstand zwischen den Artikeln kleiner als aus dem Stand der Technik bekannt gewählt werden kann, da ein auszusortierender, nachlaufender Artikel bereits zumindest zum Teil an dem entgegen der Förderrichtung liegenden Ende des jeweiligen Weichenarms vorbei gelaufen sein darf. Anders formuliert darf sich der jeweilige Artikel zumindest teilweise bereits neben dem jeweiligen Weichenarm befinden, wenn dieser von seiner Grundstellung in die Aussortierstellung bewegt wird. Insbesondere kann der jeweilige Artikel durch den jeweiligen Weichenarm nicht nur umgelenkt werden, sondern - abhängig von der Position des jeweiligen Artikels - zusätzlich auch in Richtung der jeweiligen Zielseite geschoben werden. Dies ermöglicht kürzere Artikellücken und/oder höhere Förderbandgeschwindigkeiten.

Die Aussortiervorrichtung umfasst nach der Erfindung zwei derartige Weichenarme, deren Schwenklager auf einander gegenüberliegenden Seiten des Förderbands, auf gleicher Höhe in Förderrichtung, angeordnet sind. Die beiden Aussortiersignale und die beiden Kontrollsysteme für die beiden Weichenarme sind dabei bevorzugt voneinander verschieden. Damit können Artikel anhand von zwei verschiedenen Kriterien in zwei verschiedene Auffangbehälter aussortiert werden. Beispielsweise können in den einen Auffangbehälter fehlgewichtige Artikel, für die von einem Wägeband ein entsprechendes Aussortiersignal erzeugt wird, und in den anderen Auffangbehälter mit Metall verunreinigte Artikel, für die von einem Metalldetektor eine entsprechendes Aussortiersignal erzeugt wird, aussortiert werden. Die beiden Weichenarme sind jeweils in ihrer vertikalen Höhe, insbesondere in eine abgesenkte Position, verstellbar.

Die Steuereinheit ist nach der Erfindung dazu ausgebildet, die beiden Weichenarme derart miteinander zu koordinieren bzw. synchronisieren, dass bei einem Verschwenken des einen Weichenarms in die Aussortierstellung der andere Weichenarm automatisch in seiner vertikalen Höhe, insbesondere in eine abgesenkte Position und/oder eine angehobene Position, verstellt wird. Da bei der erfindungsgemäßen Anordnung der Schwenklager die auszusortierenden Artikel auf der dem jeweiligen Schwenklager gegenüberliegenden Seite von der Förderstrecke gelenkt werden, wird hierdurch ermöglicht, die beiden Weichenarme auf gleicher Höhe in Förderrichtung anzuordnen. Andernfalls würde der jeweilige andere Weichenarm dem auszusortierenden Artikel im Weg stehen.

Insbesondere kann der jeweilige Weichenarm mittels eines Verschiebeantriebs der jeweiligen Verstelleinrichtung in seiner vertikalen Höhe verstellbar sein. Auch bei einer Aussortiereinrichtung mit nur einem Weichenarm kann der Weichenarm in seiner vertikalen Höhe, insbesondere in eine abgesenkte Position und/oder in eine angehobene Position, verstellbar sein.

Vorzugsweise sind die beiden Weichenarme jeweils absenkbar. Insbesondere ist es bevorzugt, wenn der jeweilige Weichenarm in der abgesenkten Position nicht über die Oberseite eines Obertrums des Förderbands nach oben hervorsteht.

Grundsätzlich ist es jedoch auch denkbar, dass die Weichenarme jeweils in ihrer vertikalen Höhe anhebbar sind. Die auszusortierenden Artikel können dann unterhalb der Weichenarme hindurch laufen. Hierbei ist es denkbar, dass der jeweilige Weichenarm in der Grundstellung zumindest teilweise über dem Förderband, und zwar in dessen jeweiligen längsseitigen Randbereich, verläuft.

Grundsätzlich wäre es auch möglich, anstelle zweier Weichenarme zwei Blasausscheider einzusetzen. Die beiden Blasausscheider können auf gleicher Höhe in Förderrichtung beidseits des Förderbands angeordnet sein und jeweils abgesenkt werden. Der aktivierte Blasausscheider kann einen auszusortierenden Artikel dann mit Druckluft über den nicht aktivierten Blasausscheider hinweg in einen jeweiligen Auffangbehälter schieben.

Gemäß einer Ausführungsform der Erfindung umfasst die jeweilige Verstelleinrichtung eine Hülse, in der die jeweilige Welle aufgenommen ist, wobei die Hülse und die Welle drehfest und längsverschiebbar miteinander gekoppelt sind. Mit einer derartigen Verstelleinrichtung kann sowohl ein Verschwenken des jeweiligen Weichenarms als auch eine Höhenverstellung des jeweiligen Weichenarms erreicht werden. Insbesondere kann zur Kopplung der Hülse mit der Welle in der Hülse wenigstens ein Längsschlitz ausgebildet sein, in den ein jeweiliger, an der Welle ausgebildeter Passvorsprung längsverschiebbar eingreift. Der jeweilige Schwenkantrieb kann mit der jeweiligen Hülse gekoppelt sein, um die Schwenkbewegung des jeweiligen Weichenarms zu bewirken, und/oder der jeweilige Verschiebeantrieb kann mit der jeweiligen Welle gekoppelt sein, um eine Verstellung der vertikalen Höhe des jeweiligen Weichenarms zu bewirken.

Grundsätzlich kann der jeweilige Schwenkantrieb und/oder der vorgenannte, jeweilige Verschiebeantrieb als ein Hubzylinder, insbesondere Pneumatikzylinder, ausgebildet sein. Grundsätzlich ist als jeweiliger Schwenkantrieb und/oder jeweili-ger Verschiebeantrieb aber auch ein Hydraulikzylinder oder ein Elektromotor geeignet. Darüber hinaus ist es bevorzugt, wenn für jeden der beiden Weichenarme auf der jeweils gegenüberliegenden Seite des Förderbands ein jeweiliger Auffangbehälter für auszusortierende Artikel vorgesehen ist, der in einer Richtung senkrecht zur Förderrichtung und von innen nach außen betrachtet jeweils hinter dem anderen Weichenarm angeordnet ist.

Insbesondere erstreckt sich der jeweilige Weichenarm in der Aussortierstellung quer und/oder über die gesamte Breite des Förderbands hinweg. Darüber hinaus ist es bevorzugt, wenn der jeweilige Weichenarm in der Aussortierstellung einen spitzen Winkel von 60° oder kleiner, insbesondere 45° oder kleiner, mit der Förderrichtung einschließt. Durch diese Maßnahmen kann das Aussortieren besonders störungsfrei erfolgen.

Die Erfindung betrifft ferner eine Kontrollwaage, insbesondere eine dynamische Kontrollwaage, mit einer Aussortiervorrichtung, wie sie vorstehend beschrieben ist, und/oder einen Preisauszeichner, insbesondere einen dynamischen Preisauszeichner, mit einer Aussortiervorrichtung, wie sie vorstehend beschrieben ist. Weitere vorteilhafte Ausgestaltungen der Erfindung sind in den Unteransprüchen, der Figurenbeschreibung und der Zeichnung beschrieben.

Die Erfindung wird im Folgenden beispielhaft unter Bezugnahme auf die Zeichnung beschrieben. Es zeigen,
- Fig. 1: eine schematische Darstellung einer Kontrollwaage mit einer Aussortiervorrichtung in einer Draufsicht,
- Fig. 2a: eine Aussortiervorrichtung in einer perspektivischen Ansicht mit einem Weichenarm in einer Grundstellung,
- Fig. 2b: die Aussortiervorrichtung aus Fig. 2a mit dem Weichenarm in einer Aussortierstellung,
- Fig. 3: eine erfindungsgemäße Aussortiervorrichtung,
- Fig. 4a: eine Verstelleinrichtung für einen Weichenarm, mit einer Welle und einer Hülse, und
- Fig. 4b: die Verstelleinrichtung aus Fig. 4a, wobei der Weichenarm verstellt und die Hülse weggelassen ist.

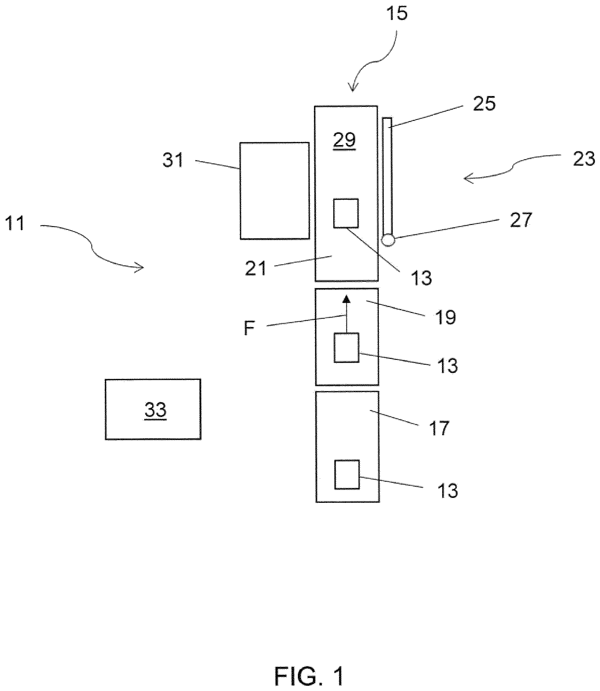

In Fig. 1 ist eine dynamische Kontrollwaage 11 bzw. ein dynamischer Checkweigher dargestellt, die bzw. der bei der Herstellung und Produktion von Artikeln 13 bzw. Produkten eingesetzt wird, um deren Gewicht im Durchlauf zu messen und derart zu überwachen, dass fehlgewichtige Artikel ausgesondert werden. Hierzu umfasst die Kontrollwaage 11 eine Transportbandeinrichtung 15. Die Transportbandeinrichtung 15 weist ein Zuführband 17, ein Wägeband 19 mit einer nicht dargestellten Messzelle zur Bestimmung des Gewichts des jeweiligen Artikels 13 sowie ein Abführband 21 auf. Die Artikel 13 werden dabei auf bzw. entlang einer Förderstrecke 29, die durch die Bänder 17, 19, 21, insbesondere das Abführband 21, definiert ist, in eine Förderrichtung F transportiert. Die Kontrollwaage 11 kann zusätzlich einen Metalldetektor, ein Röntgen-Inspektionssystem und/oder ein optisches Kontrollsystem umfassen.

Das Abführband 21 ist Teil einer Aussortiervorrichtung 23, mit der Artikel 13, die nicht innerhalb einer vorgegebenen Gewichtsbandbreite liegen, aussortiert werden können. Bei einem Preisauszeichner anstelle einer Kontrollwaage können Artikel insbesondere dann aussortiert werden, wenn sie mit Metall verunreinigt sind.

Zum Aussortieren weist die Aussortiervorrichtung 23 ferner einen Weichenarm 25 auf, der grundsätzlich auch als Abweiser bezeichnet werden kann, und der an einem Ende um eine Drehachse eines Schwenklagers 27 schwenkbar gelagert ist. Das Schwenklager 27 ist in der in Fig. 1 gezeigten Ausführungsform in Förderrichtung F auf der rechten Seite des Abführbands 21 angeordnet. Der Weichenarm 25 ist zwischen einer Grundstellung, wie sie in Fig. 1 gezeigt ist, und einer Aussortierstellung, in der der Weichenarm 25 in die Förderstrecke 29 des Abführbands 21 eingeschwenkt ist, verschwenkbar.

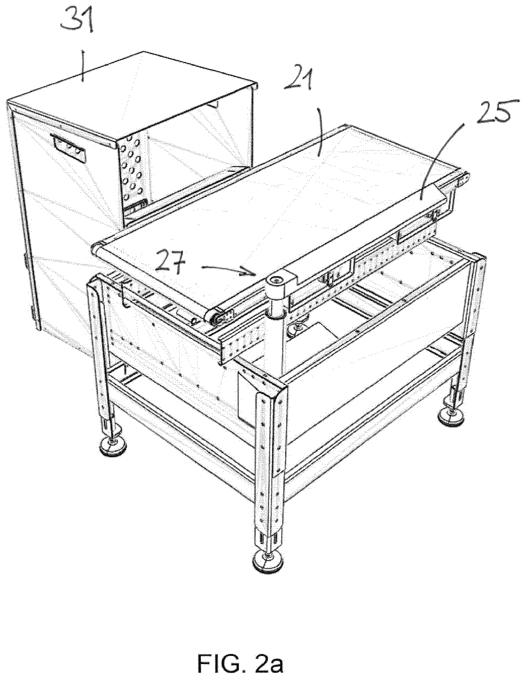

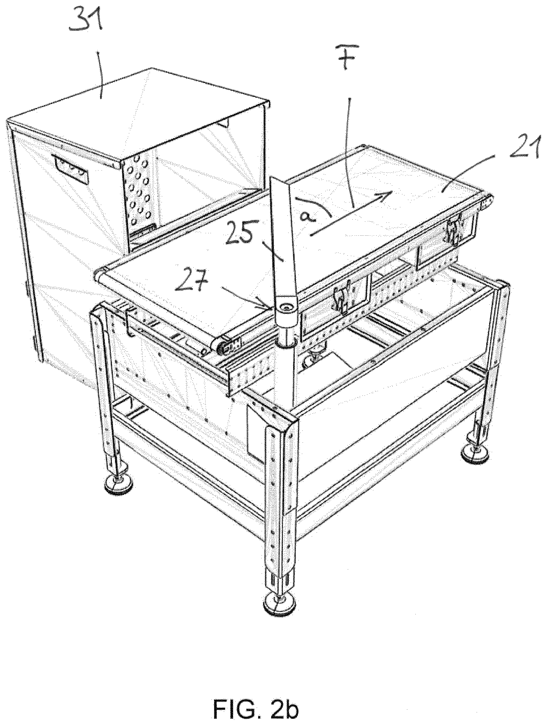

Die beiden vorgenannten Stellungen des Weichenarms 25 sind anhand der Ausführungsform gemäß den Fig. 2a und 2b dargestellt. In der Grundstellung (Fig. 2a) erstreckt sich der Weichenarm 25 neben dem Abführband 21 und zumindest im Wesentlichen parallel zur Förderrichtung F. In der Aussortierstellung (Fig. 2b) erstreckt sich der Weichenarm 25 quer und über die gesamte Breite des Abführbands 21 hinweg, wobei der Weichenarm 25 dabei einen spitzen Winkel a von 60° oder kleiner, insbesondere 45° oder kleiner, mit der Förderrichtung F einschließt.

Besonders an der vorliegenden Aussortiervorrichtung 23 ist, dass das Schwenklager 27 an dem entgegen der Förderrichtung F liegenden Ende des Weichenarms 25 vorgesehen ist (vgl. insbesondere die Grundstellung gemäß Fig. 2a). Anders als aus dem Stand der Technik bekannt, bei dem das Schwenklager an dem entgegen der Förderrichtung liegenden Ende des Weichenarms vorgesehen ist, werden vorliegend daher die auszusortierenden Artikel nicht auf der Seite des Abführbands aussortiert, auf der sich das Schwenklager des Weichenarms befindet, sondern die auszusortierenden Artikel 13 werden auf der dem Schwenklager 27 gegenüberliegenden Seite des Abführbands 21 von dem Abführband 21 gelenkt. Ein Auffangbehälter 31 für die aussortierten Artikel 13 befindet sich daher auf der dem Schwenklager 27 gegenüberliegenden Seite des Abführbands 21. Dies hat den Vorteil, dass die Artikel 13 näher aufeinander folgend auf der Transportbandeinrichtung 15 platziert werden können, da der Weichenarm 25 - anders als im Stand der Technik möglich - auch dann noch ausgeschwenkt werden kann, um einen auszusortierenden Artikel 13 abzulenken bzw. auszusortieren, wenn sich dieser Artikel 13 bereits auf Höhe des Weichenarms 25 befindet bzw. bereits teilweise an dem Weichenarm 25 vorbei gelaufen ist.

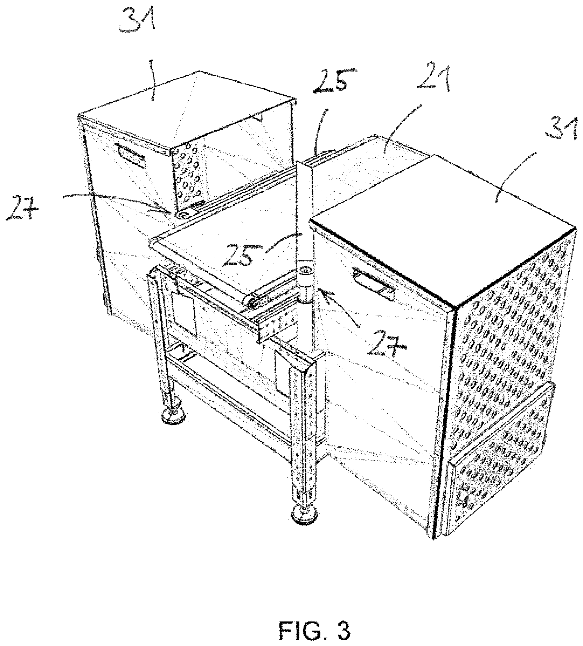

Bei der Ausführungsform gemäß Fig. 3 sind auf beiden Seiten des Abführbands 21, auf gleicher Höhe in Förderrichtung F, jeweils ein Weichenarm 25, wie er vorstehend erläutert ist, angeordnet. Die beiden Schwenklager 27 der beiden Weichenarme 25 befinden sich also auf einander gegenüberliegenden Seiten des Abführbands 21, d.h. rechts und links des Abführbands 21, und auf beiden Seiten des Abführbands 21 ist ein jeweiliger Auffangbehälter 31 angeordnet. Die beiden Weichenarme 25 sind dabei jeweils zwischen dem Abführband 21 und dem auf der jeweiligen Seite angeordneten Auffangbehälter 31 angeordnet.

Von dem rechts von dem Abführband 21 angeordneten Weichenarm 25 werden auszusortierende Artikel 13 in den links von dem Abführband 21 angeordneten Auffangbehälter 31 umgeleitet, und von dem links von dem Abführband 21 angeordneten Weichenarm 25 werden auszusortierende Artikel 13 in den rechts von dem Abführband 21 angeordneten Auffangbehälter 31 umgeleitet. Dies ist insbesondere dann von Vorteil, wenn in die Transporteinrichtung 15 neben dem Wägeband 19, mit dem das Gewicht der Artikel 13 gemessen wird, ein weiteres Kontrollsystem für die Artikel 13 integriert ist, beispielsweise ein Metalldetektor, mit dem mit Metall verunreinigte Artikel 13 identifiziert werden können. Der Metalldetektor kann z.B. zwischen dem Zuführband 17 und dem Wägeband 19 angeordnet sein. Beispielsweise können dann fehlgewichtige Artikel 13 von dem rechten Weichenarm 25 in den linken Auffangbehälter 31 und mit Metall verunreinigte Artikel 13 von dem linken Weichenarm 25 in den rechten Auffangbehälter 31 abgeleitet werden.

Da der linke Weichenarm 25 einem von dem rechten Weichenarm 25 umgeleiteten auszusortierenden Artikel 13 auf dem Weg zu dem linken Auffangbehälter 31 im Weg stehen würde, und umgekehrt, sind die beiden Weichenarme 25 jeweils in eine abgesenkte Position verstellbar, wie es in Fig. 3 für den linken Weichenarm 25 gezeigt ist, damit der jeweilige auszusortierende Artikel 13 über den jeweiligen ansonsten im Weg stehenden Weichenarm 25 hinweglaufen kann. Grundsätzlich wäre aber auch ein Anheben der beiden Weichenarme 25 und ein unter den Weichenarmen 25 Hindurchlaufen der auszusortierenden Artikel 13 denkbar. Die Bewegungen der beiden Weichenarme 25 sind dabei derart miteinander koordiniert, dass bei einem Verschwenken des rechten Weichenarms 25 in die Aussortierstellung der linke Weichenarm 25 automatisch in seine abgesenkte Position abtaucht, und umgekehrt. Die Koordinierung der Bewegungen der beiden Weichenarme 25 erfolgt durch eine lediglich in Fig. 1 gezeigte Steuereinheit 33, die sowohl für die Schwenkbewegung des jeweiligen Weichenarms 25 als auch für die Verstellbewegung des jeweiligen Weichenarms 25 in vertikaler Höhe verantwortlich ist.

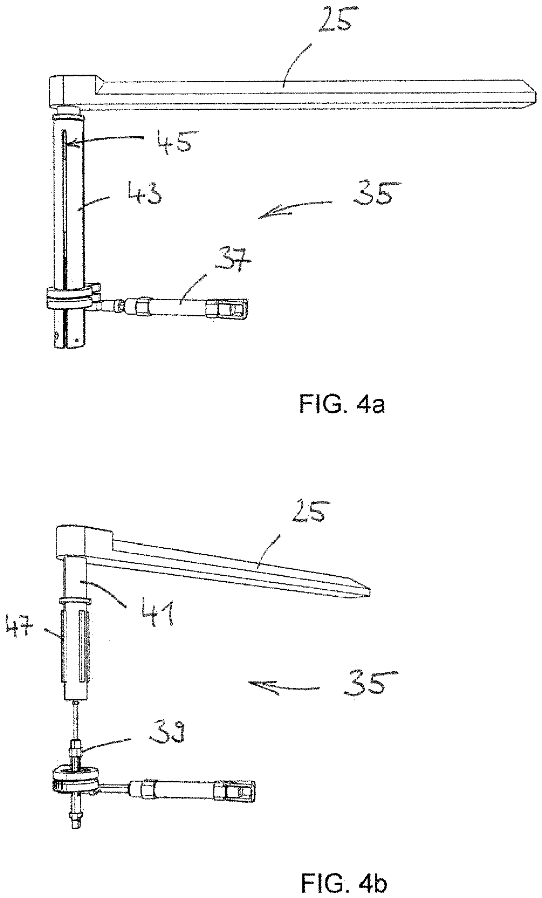

Mit der Steuereinheit 33 kann eine jeweilige Verstelleinrichtung 35 für den jeweiligen Weichenarm 25, wie sie in den Fig. 4a und 4b näher dargestellt ist, angesteuert werden. Die jeweilige Verstelleinrichtung 35 umfasst eine Hülse 43, in der eine mit dem jeweiligen Weichenarm 25 fest verbundene Welle 41 des jeweiligen Schwenklagers 27 aufgenommen ist. Die Hülse 43 und die Welle 41 sind drehfest und längsverschiebbar miteinander gekoppelt. Diese Kopplung erfolgt dadurch, dass in der Hülse 43 mehrere Längsschlitze 45 ausgebildet sind, in die jeweils ein an der Welle 41 ausgebildeter Passvorsprung 47 längsverschiebbar eingreift.

Durch einen an der jeweiligen Hülse 43 angreifenden jeweiligen Schwenkantrieb 37, der beispielsweise als Pneumatikzylinder ausgebildet ist, kann dann der jeweilige Weichenarm 25 zwischen der Grundstellung und der Aussortierstellung verschwenkt werden, und durch einen an der jeweiligen Welle 41 angreifenden Verschiebeantrieb 39, der ebenfalls als Pneumatikzylinder ausgebildet sein kann, kann der jeweilige Weichenarm 25 zwischen der Grundstellung und der abgesenkten Position in seiner Höhe verstellt werden.

Die Aktivierung des Schwenkantriebs 37 für den rechten Weichenarm 25 und damit der Verschwenkbewegung des rechten Weichenarms 25 von der Grundstellung in die Aussortierstellung basiert auf einem Aussortiersignal, das von dem Wägeband 19 an die Steuereinheit 33 abgesetzt wird. Gleichzeitig steuert die Steuereinheit 33 dann den Verschiebeantrieb 39 des linken Weichenarms 25 derart an, dass der linke Weichenarm 25 abgesenkt wird. Hierdurch können fehlgewichtigen Artikel 13 in den linken Auffangbehälter 31 aussortiert werden. Die Aktivierung des Schwenkantriebs 37 für den linken Weichenarm 25 und damit der Verschwenkbewegung des linken Weichenarms 25 von der Grundstellung in die Aussortierstellung hingegen basiert auf einem Aussortiersignal, das von dem vorgenannten Metalldetektor an die Steuereinheit 33 übermittelt wird. Gleichzeitig steuert die Steuereinheit 33 dann den Verschiebeantrieb 39 des rechten Weichenarms 25 derart an, dass der rechte Weichenarm 25 abgesenkt wird. Hierdurch können mit Metall verunreinigte Artikel 13 in den rechten Auffangbehälter 31 aussortiert werden.

### Bezugszeichenliste

- 11: Kontrollwaage
- 13: Artikel
- 15: Transportbandeinrichtung
- 17: Zuführband
- 19: Wägeband
- 21: Abführband
- 23: Aussortiervorrichtung
- 25: Weichenarm
- 27: Schwenklager
- 29: Förderstrecke
- 31: Auffangbehälter
- 33: Steuereinheit
- 35: Verstelleinrichtung
- 37: Schwenkantrieb
- 39: Verschiebeantrieb
- 41: Welle
- 43: Hülse
- 45: Längsschlitz
- 47: Passvorsprung
- a: Winkel
- F: Förderrichtung

## Patentansprüche

1. Vorrichtung zum Aussortieren von auf einem Förderband (17, 19, 21) in eine Förderrichtung (F) transportierten Artikeln (13), umfassend
ein Förderband (21), das eine Förderstrecke (29) definiert,
einen Weichenarm (25), der an einem Ende um eine Drehachse eines jeweiligen in Förderrichtung (F) auf einer Seite des Förderbands (21) angeordneten, eine Welle (41) aufweisenden Schwenklagers (27) schwenkbar gelagert und zwischen einer Grundstellung, in der sich der jeweilige Weichenarm (25) außerhalb der Förderstrecke (29), außerhalb des Förderbands (21), und in Förderrichtung (F) erstreckt, und einer Aussortierstellung, in der der jeweilige Weichenarm (25) in die Förderstrecke (29) eingeschwenkt ist, verschwenkbar ist,
eine jeweilige mit der Welle (41) des jeweiligen Schwenklagers (27) antriebswirksam gekoppelte, einen Schwenkantrieb (37) umfassende Verstelleinrichtung (35), und
eine Steuereinheit (33) zur Aktivierung der jeweiligen Verstelleinrichtung (35) und damit der Einschwenkbewegung des jeweiligen Weichenarms (25) in Reaktion auf ein jeweiliges von einem jeweiligen Kontrollsystem (19) für die Artikel (13), insbesondere einem Wägeband, empfangenes Aussortiersignal,
wobei das jeweilige Schwenklager (27) an dem entgegen der Förderrichtung (F) liegenden Ende des jeweiligen Weichenarms (25) vorgesehen ist, um einen auszusortierenden Artikel (13) auf der dem jeweiligen Schwenklager (27) gegenüberliegenden Seite von dem Förderband (21) zu lenken,
**dadurch gekennzeichnet , dass**
die Aussortiervorrichtung (23) zwei derartige Weichenarme (25) umfasst, deren Schwenklager (27) auf einander gegenüberliegenden Seiten des Förderbands (21), auf gleicher Höhe in Förderrichtung (F), angeordnet und die jeweils in ihrer vertikalen Höhe, insbesondere in eine abgesenkte Position, verstellbar sind, und
die Steuereinheit (33) dazu ausgebildet ist, die beiden Weichenarme (25) derart miteinander zu koordinieren, dass bei einem Verschwenken des einen Weichenarms (25) in die Aussortierstellung der andere Weichenarm (25) automatisch in seiner vertikalen Höhe verstellt wird.

2. Aussortiervorrichtung nach Anspruch 1,
**dadurch gekennzeichnet , dass**
sich der jeweilige Weichenarm (25) in der Aussortierstellung quer und/oder über die gesamte Breite des Förderbands (21) hinweg erstreckt.

3. Aussortiervorrichtung nach Anspruch 1 oder 2,
**dadurch gekennzeichnet , dass**
der jeweilige Weichenarm (25) in der Aussortierstellung einen spitzen Winkel (a) von 60° oder kleiner, insbesondere 45° oder kleiner, mit der Förderrichtung (F) einschließt.

4. Aussortiervorrichtung nach zumindest einem der vorstehenden Ansprüche,
**dadurch gekennzeichnet , dass**
der jeweilige Weichenarm (25) mittels eines Verschiebeantriebs (39) der jeweiligen Verstelleinrichtung (35) in seiner vertikalen Höhe verstellbar ist.

5. Aussortiervorrichtung nach Anspruch 4,
**dadurch gekennzeichnet , dass**
die jeweilige Verstelleinrichtung (35) eine Hülse (43) umfasst, in der die jeweilige Welle (41) aufgenommen ist, wobei die Hülse (43) und die Welle (41) drehfest und längsverschiebbar miteinander gekoppelt sind.

6. Aussortiervorrichtung nach Anspruch 5,
**dadurch gekennzeichnet , dass**
zur Kopplung der Hülse (43) mit der Welle (41) in der Hülse (43) wenigstens ein Längsschlitz (45) ausgebildet ist, in den ein jeweiliger, an der Welle (41) ausgebildeter Passvorsprung (47) längsverschiebbar eingreift.

7. Aussortiervorrichtung nach Anspruch 5 oder 6,
**dadurch gekennzeichnet , dass**
der jeweilige Schwenkantrieb (37) mit der jeweiligen Hülse (43) gekoppelt ist, um die Schwenkbewegung des jeweiligen Weichenarms (25) zu bewirken, und/oder dass der jeweilige Verschiebeantrieb (39) mit der jeweiligen Welle (41) gekoppelt ist, um eine Verstellung der vertikalen Höhe des jeweiligen Weichenarms (25) zu bewirken.

8. Aussortiervorrichtung nach zumindest einem der vorstehenden Ansprüche,
**dadurch gekennzeichnet , dass**
der jeweilige Schwenkantrieb (37) und/oder ein jeweiliger Verschiebeantrieb (39) als ein Hubzylinder, insbesondere Pneumatikzylinder, ausgebildet ist.

9. Aussortiervorrichtung nach zumindest einem der vorstehenden Ansprüche,
**dadurch gekennzeichnet , dass**
für jeden der beiden Weichenarme (25) auf der jeweils gegenüberliegenden Seite des Förderbands (21) ein jeweiliger Auffangbehälter (31) für auszusortierende Artikel (13) vorgesehen ist, der in einer Richtung senkrecht zur Förderrichtung (F) und von innen nach außen betrachtet jeweils hinter dem anderen Weichenarm (25) angeordnet ist.

10. Kontrollwaage, insbesondere dynamische Kontrollwaage, mit einer Aussortiervorrichtung (23) nach zumindest einem der vorstehenden Ansprüche.

## Claims

1. An apparatus for sorting out articles (13) transported on a conveyor belt (17, 19, 21) in a conveying direction (F), comprising
a conveyor belt (21) which defines a conveying path (29);
a diverter arm (25) which is pivotably supported at one end about an axis of rotation of a respective pivot bearing (27), which is arranged in the conveying direction (F) at one side of the conveyor belt (21) and which has a shaft (41), and is pivotable between a base position, in which the respective diverter arm (25) extends outside the conveying path (29), outside the conveyor belt (21) and in the conveying direction (F), and a sorting-out position in which the respective diverter arm (25) is pivoted into the conveying path (29);
a respective adjustment device (35) which is drive-effectively coupled to the shaft (41) of the respective pivot bearing (27) and which comprises a pivot drive (37); and
a control unit (33) for activating the respective adjustment device (35) and thus the pivot-in movement of the respective diverter arm (25) in response to a respective sorting-out signal received from a respective control system (19) for the articles (13), in particular a weighing belt,
wherein the respective pivot bearing (27) is provided at the end of the respective diverter arm (25) disposed opposite the conveying direction (F) in order to direct an article (13) to be sorted out at the side disposed opposite the respective pivot bearing (27) from the conveyor belt (21),
**characterized in that**
the sorting-out apparatus (23) comprises two such diverter arms (25) whose pivot bearings (27) are arranged at mutually oppositely disposed sides of the conveyor belt (21), at the same height in the conveying direction (F), and
which are each adjustable in their vertical height, in particular into a lowered position, and
the control unit (33) is configured to coordinate the two diverter arms (25) with one another such that, on a pivoting of the one diverter arm (25) into the sorting-out position, the other diverter arm (25) is automatically adjusted in its vertical height.

2. A sorting-out apparatus in accordance with claim 1,
**characterized in that**
the respective diverter arm (25) extends transversely and/or across the entire width of the conveyor belt (21) in the sorting-out position.

3. A sorting-out apparatus in accordance with claim 1 or claim 2,
**characterized in that**
the respective diverter arm (25) encloses an acute angle (a) of 60° or less, in particular 45° or less, with the conveying direction (F) in the sorting-out position.

4. A sorting-out apparatus in accordance with at least one of the preceding claims,
**characterized in that**
the respective diverter arm (25) can be adjusted in its vertical height by means of a displacement drive (39) of the respective adjustment device (35).

5. A sorting-out apparatus in accordance with claim 4,
**characterized in that**
the respective adjustment device (35) comprises a sleeve (43) in which the respective shaft (41) is received, with the sleeve (43) and the shaft (41) being rotationally fixedly and longitudinally displaceably coupled to one another.

6. A sorting-out apparatus in accordance with claim 5,
**characterized in that**
at least one longitudinal slot (45) is formed in the sleeve (43) for coupling the sleeve (43) to the shaft (41), into which longitudinal slot (45) a respective fitting projection (47) formed at the shaft (41) engages in a longitudinally displaceable manner.

7. A sorting-out apparatus in accordance with claim 5 or claim 6,
**characterized in that**
the respective pivot drive (37) is coupled to the respective sleeve (43) to effect the pivot movement of the respective diverter arm (25), and/or **in that** the respective displacement drive (39) is coupled to the respective shaft (41) to effect an adjustment of the vertical height of the respective diverter arm (25).

8. A sorting-out apparatus in accordance with at least one of the preceding claims,
**characterized in that**
the respective pivot drive (37) and/or a respective displacement drive (39) is/are configured as a lift cylinder, in particular a pneumatic cylinder.

9. A sorting-out apparatus in accordance with at least one of the preceding claims,
**characterized in that**,
for each of the two diverter arms (25), a respective collection container (31) for articles (13) to be sorted out is provided at the respective oppositely disposed side of the conveyor belt (21), said respective collection container (31) being arranged in a direction perpendicular to the conveying direction (F) and, viewed from the inside to the outside, behind the other diverter arm (25) in each case.

10. A checkweigher, in particular a dynamic checkweigher, comprising a sorting-out apparatus (23) in accordance with at least one of the preceding claims.

## Revendications

1. Dispositif pour éliminer par tri des articles (13) transportés sur une bande transporteuse (17, 19, 21) dans une direction de transport (F), comprenant une bande transporteuse (21) qui définit un trajet de transport (29),
un bras d'aiguillage (25) qui est monté à une extrémité de manière à pouvoir pivoter autour d'un axe de rotation d'un palier de pivotement (27) respectif disposé dans la direction de transport (F) sur un côté de la bande transporteuse (21) et présentant un arbre (41), et qui peut pivoter entre une position de base dans laquelle le bras d'aiguillage (25) respectif s'étend à l'extérieur du trajet de transport (29), à l'extérieur de la bande transporte (21), et dans la direction de transport (F), et une position d'élimination par tri dans laquelle le bras d'aiguillage (25) respectif est pivoté jusque dans le trajet de transport (29),
un organe de réglage (35) respectif couplé en entraînement à l'arbre (41) du palier de pivotement (27) respectif et comprenant un entraînement de pivotement (37), et
une unité de commande (33) pour activer l'organe de réglage (35) respectif et ainsi le mouvement de pivotement du bras d'aiguillage (25) respectif en réaction à un signal d'élimination par tri respectif reçu par un système de contrôle (19) respectif pour les articles (13), en particulier une bande de pesage,
dans lequel
le palier de pivotement (27) respectif est prévu à l'extrémité du bras d'aiguillage (25) respectif située en sens opposé à la direction de transport (F), afin de dévier de la bande transporteuse (21) un article (13) à éliminer par tri du côté opposé au palier de pivotement (27) respectif,
**caractérisé en ce que**
le dispositif d'élimination par tri (23) comprend deux bras d'aiguillage (25) de ce type, dont les paliers de pivotement (27) sont disposés sur des côtés opposés l'un à l'autre de la bande transporteuse (21), à la même hauteur dans la direction de transport (F), et sont chacun réglables quant à leur hauteur verticale, en particulier jusque dans une position abaissée, et l'unité de commande (33) est réalisée pour coordonner les deux bras d'aiguillage (25) l'un avec l'autre de telle sorte que, lors d'un pivotement de l'un des bras d'aiguillage (25) jusque dans la position d'élimination par tri, l'autre bras d'aiguillage (25) est automatiquement réglé quant à sa hauteur verticale.

2. Dispositif d'élimination par tri selon la revendication 1,
**caractérisé en ce que**
dans la position d'élimination par tri, le bras d'aiguillage (25) respectif s'étend transversalement et/ou sur toute la largeur de la bande transporteuse (21).

3. Dispositif d'élimination par tri selon la revendication 1 ou 2,
**caractérisé en ce que**
dans la position d'élimination par tri, le bras d'aiguillage (25) respectif définit un angle aigu (a) de 60° ou moins, en particulier de 45° ou moins, avec la direction de transport (F).

4. Dispositif d'élimination par tri selon l'une au moins des revendications précédentes,
**caractérisé en ce que**
le bras d'aiguillage (25) respectif peut être réglé quant à son hauteur verticale au moyen d'un entraînement de translation (39) de l'organe de réglage (35) respectif.

5. Dispositif d'élimination par tri selon la revendication 4,
**caractérisé en ce que**
l'organe de réglage (35) respectif comprend un manchon (43) dans lequel est logé l'arbre (41) respectif, le manchon (43) et l'arbre (41) étant couplés l'un à l'autre de manière solidaire en rotation et mobile en translation longitudinale.

6. Dispositif d'élimination par tri selon la revendication 5,
**caractérisé en ce que**
pour le couplage du manchon (43) à l'arbre (41), au moins une fente longitudinale (45) est ménagée dans le manchon (43), dans laquelle une saillie d'ajustement (47) respective formée sur l'arbre (41) s'engage de façon mobile en translation longitudinale.

7. Dispositif d'élimination par tri selon la revendication 5 ou 6,
**caractérisé en ce que**
l'entraînement de pivotement (37) respectif est couplé au manchon (43) respectif afin de provoquer le mouvement de pivotement du bras d'aiguillage (25) respectif, et/ou
**en ce que** l'entraînement de translation (39) respectif est couplé à l'arbre (41) respectif afin de provoquer un réglage de la hauteur verticale du bras d'aiguillage (25) respectif.

8. Dispositif d'élimination par tri selon l'une au moins des revendications précédentes,
**caractérisé en ce que**
l'entraînement de pivotement (37) respectif et/ou un entraînement de translation (39) respectif est réalisé sous la forme d'un vérin de levage, en particulier d'un vérin pneumatique.

9. Dispositif d'élimination par tri selon l'une au moins des revendications précédentes,
**caractérisé en ce que**
pour chacun des deux bras d'aiguillage (25), sur le côté respectivement opposé de la bande transporteuse (21), il est prévu un récipient collecteur (31) respectif pour les articles (13) à éliminer par tri, qui, vu de l'intérieur vers l'extérieur, est disposé derrière l'autre bras d'aiguillage (25) respectif dans une direction perpendiculaire à la direction de transport (F).

10. Balance de vérification, en particulier balance de vérification dynamique, comportant un dispositif d'élimination par tri (23) selon l'une au moins des revendications précédentes.
